# EUROPEAN PATENT SPECIFICATION

(11) **EP 3 845 813 B1**
(45) Date of publication and mention of the grant of the patent: **03.04.2024**
(21) Application number: 19220199.4
(22) Date of filing: 31.12.2019
(51) Int. Cl.: F23R 3/34, F02C 9/28

(54) **METHOD FOR OPERATING A GAS TURBINE ASSEMBLY AND GAS TURBINE ASSEMBLY**
VERFAHREN ZUM BETRIEB EINER GASTURBINENANORDNUNG UND GASTURBINENANORDNUNG
PROCÉDÉ DE FONCTIONNEMENT D'UN ENSEMBLE DE TURBINE À GAZ ET ENSEMBLE DE TURBINE À GAZ

(43) Date of publication of application: 07.07.2021
(73) Proprietor: Ansaldo Energia Switzerland AG, 5400 Baden (CH)
(72) Inventor: STUDERUS, Adrien, 5400 BADEN (CH); APPEL, Christoph, 5400 BADEN (CH); RINN, Joerg, 5400 BADEN (CH); JAKOBY, Ralf, 5400 BADEN (CH); JENNEY, Alan Russel, 5323 RIETHEIM (CH)
(74) Representative: Studio Torta S.p.A.

(56) References cited:
- EP-A1- 3 376 003
- US-A1- 2010 215 480
- US-A1- 2014 109 586

## Description

### TECHNICAL FIELD

The present invention relates to a method for operating a gas turbine assembly and to a gas turbine assembly. In particular the gas turbine assembly of the present invention is part of an electric power production plant.

### BACKGROUND

As is known, a gas turbine assembly for power plants comprises a compressor, a combustor and a turbine.

In particular, the compressor comprises an inlet supplied with air and a plurality of rotating blades compressing the passing air. The compressed air leaving the compressor flows into a plenum, i.e. a closed volume delimited by an outer casing, and from there into the combustor. Inside the combustor, the compressed air is mixed with at least one fuel and combusted. The resulting hot gas leaves the combustor and expands in the turbine. In the turbine the hot gas expansion moves rotating blades connected to a rotor, performing work.

As known, the power demand from the network can change during the normal operation of the plant. When the power demand from the network is low - for example during night hours - the plants for the production of electrical energy are operated at a minimum environmental load. At said load the gas turbine assembly produces pollutant emissions (NOx and CO) under the law limits.

However, when the plant is operated at transient loads comprised between a minimum load and a base load, pollutant emissions are not always controlled in a reliable and stable way.

In particular, pollutants are not controlled in a reliable way when the load goes under the Minimum Environmental Load (MEL) and a switching-off of burners occurs. Methods for managing emissions at partial loads are disclosed in documents US2014/109586 or EP3376003.

### SUMMARY

The object of the present invention is therefore to provide a method for operating a gas turbine assembly, which enables to control in a stable and robust manner the combustor assembly in order to maintain the pollutant emissions under the law limits at all loads operations.

In particular, it is an object of the present invention to provide a method for operating a gas turbine assembly extending along a longitudinal axis and comprising a compressor, a combustor assembly and at least one gas turbine; the compressor comprising an inlet supplied with air and an outlet through which the air compressed by the compressor flows; the outlet of the compressor coming out into a plenum, which is in fluidic communication with the combustor assembly; the combustor assembly comprising at least one combustor coupled to the gas turbine and provided with a plurality of burners; the method comprising controlling the combustor assembly on the basis of at least one parameter indicative of the pressure of the air measured in the plenum ; the step of controlling the combustor assembly comprises regulating the supply of fuel to the at least one combustor on the basis of at least the parameter indicative of the pressure of the air measured in the plenum.

In this way the control of the combustor assembly is more efficient. In particular, controlling on the basis of a parameter indicative of the pressure in the plenum for controlling the combustor assembly has great advantages in terms of reliability and stability during the operation of the gas turbine assembly at any load. Pressure in the plenum correlates better to fuel mass flow than normally used parameters, especially at transient loads.

A reliable control of pollutants is therefore obtained at any operating load.

According to a preferred embodiment of the present invention, regulating the supply of fuel to the at least one combustor comprises regulating the amount of fuel supplied to the at least one combustor and/or regulating the switching-off of at least one of the plurality of burners of the combustor.

According to a preferred embodiment of the present invention, regulating the supply of fuel to the at least one combustor comprises:
- calculating the current emissions of monoxide carbon on the basis of at least the parameter indicative of the pressure of the air measured in the plenum;
- regulate the fuel supply so as to keep the CO emissions under a CO limit.

According to a preferred embodiment of the present invention, calculating the current emissions of monoxide carbon is based on at least:
- the pressure of the air measured in the plenum;
- the number of burners switched-on in combustor;
- the temperature at the inlet of the gas turbine.

According to a preferred embodiment of the present invention, the temperature at the inlet of the gas turbine is calculated at least on the basis of one parameter indicative of the pressure of the air measured in the plenum.

According to a preferred embodiment of the present invention, regulating the supply of fuel to the at least one combustor comprises:
- calculating a switching off parameter on the basis of at least the parameter indicative of the pressure of the air measured in the plenum;
- regulate the fuel supply so as to keep the switching off parameter emissions above a defined limit.

It is another object of the present invention to provide a gas turbine assembly, which can operate at transient loads while maintaining the pollutants emissions under the law limits.

According to such object the present invention relates to a gas turbine assembly according to claim 8.

### BRIEF DESCRIPTION OF THE DRAWINGS

The present invention will now be described with reference to the accompanying drawings, which illustrate some non-limitative embodiment, in which:
- figure 1 is a schematic representation of a gas turbine assembly according to the present invention;
- figure 2 is a block diagram relating to a detail of the assembly of figure 1;
- figure 3 is a diagram relating to the behaviour of the pressure in plenum and the temperature at the exhaust of the gas turbine during transient loads.

### DETAILED DESCRIPTION OF EXEMPLARY EMBODIMENTS

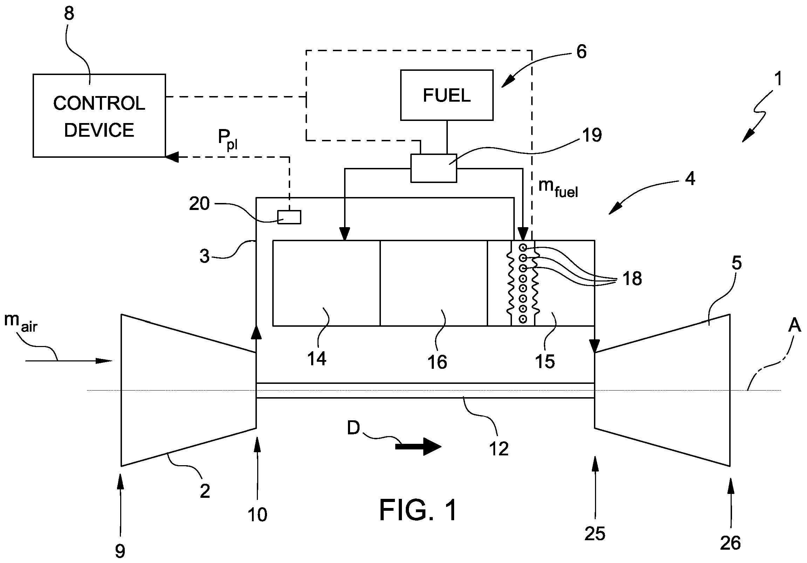

In figure 1 reference numeral 1 indicates a gas turbine assembly schematically represented.

The gas turbine assembly 1 comprises a compressor 2, a plenum 3, a combustor assembly 4, a turbine 5, a fuel supply assembly 6 and a control device 8. The compressor 2 and the turbine 5 extend along a main axis A.

The compressor 2 comprises an inlet 9 supplied with air and an outlet 10 through which the air compressed by the compressor 2 flows; the outlet 10 of the compressor 2 comes out into the plenum 3, which is in fluidic communication with the combustor assembly 4.

The fuel supply assembly 6 supplies at least one fuel to the combustor assembly 4. In the combustor assembly 4, air compressed coming from the plenum 3 is mixed with fuel and burned.

The burned mixture is then expanded in the turbine 5 and converted in mechanical power by a shaft 12, which is connected to an alternator (not shown).

In the non-limiting example here disclosed and illustrated, the combustor assembly 4 is a sequential combustor assembly which comprises a first-stage combustor 14 and a second-stage combustor 15 sequentially arranged along the gas flow direction G. In other words, the second-stage combustor 15 is arranged downstream the first-stage combustor 14 along the gas flow direction G.

Preferably, between the first stage combustor 14 and the second stage combustor 15 a mixer 16 is arranged.

The second-stage combustor 15 comprises a plurality of burners 18, which are preferably arranged circumferentially.

According to a variant not illustrated also the first combustor comprises a plurality of burners.

According to a variant not illustrated of the present invention, the sequential combustor can comprise a high pressure turbine instead of the mixer between the first stage combustor and the second stage combustor.

According to a variant not illustrated, the combustor assembly is not sequential and comprises only one combustor provided with a plurality of burners.

In the non-limiting example here disclosed and illustrated, the fuel supply assembly 6 supplies at least one fuel to the first-stage combustor 14 and to the second-stage combustor 15 and comprises an actuator assembly 19 (schematically represented) configured to regulate the amount of fuel supplied to the first-stage combustor 14 and to the second-stage combustor 15 under the control of the control device 8.

In the non-limiting example here disclosed and illustrated the fuel supplied to the first-stage combustor 14 and the fuel supplied to the second-stage combustor 15 are identical.

The air supplied to the first-stage combustor 14 and to the second-stage combustor 15 comes from the plenum 3.

The amount of air in the plenum 3 depends on the amount of air mₐᵢᵣ entering in the compressor 2. The amount of air mₐᵢᵣ entering in the compressor 2 can be varied by modifying the position of the inlet guide vanes (not shown) at the inlet 9 of the compressor 3.

Control device 8 is configured to control the combustor assembly 4.

In particular, the control device 8 is configured to control the combustor assembly 4 on the basis of at least one parameter indicative of the pressure Pₚₗ of the air measured in the plenum 3.

The gas turbine assembly 1 comprises at least one pressure sensor 20 configured to detect the value of the pressure Pₚₗ of the air in the plenum 3.

In the non-limiting example here disclosed and illustrated the plenum 3 is provided with at least one pressure tap (not illustrated) which is associated to a respective pressure sensor 20 (schematically represented by a box in figure 1).

Preferably, the pressure tap is a hole made in the wall of the plenum 3 for connecting the pressure sensor 20 with the plenum 3 for the measurement of static pressure.

More in detail, the control device 8 is configured to control the combustor assembly 4 on the basis of at least one parameter indicative of the pressure Pₚₗ of the air measured in the plenum 3.

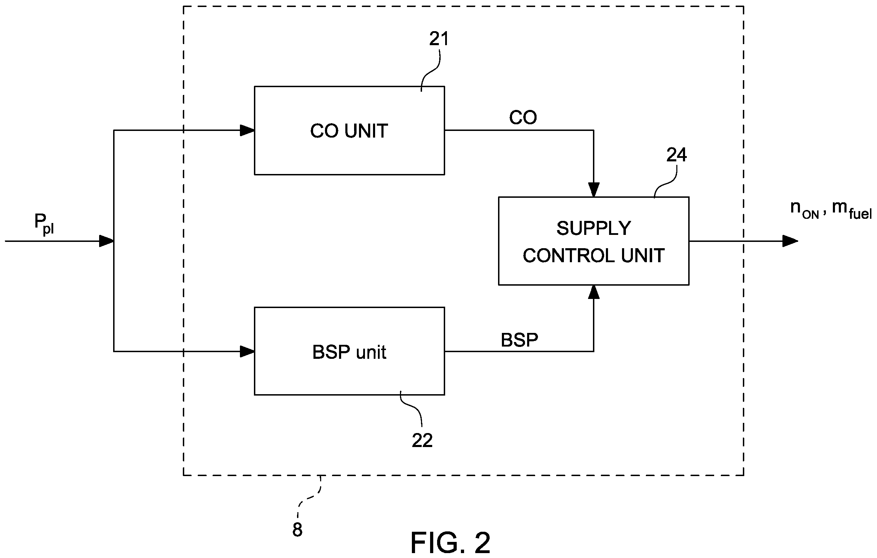

With reference to figure 2, the control device 8 comprises a CO unit 21, a BSP unit 22 and a supply control unit 24.

The CO unit 21 is configured to calculate the current CO emissions (carbon monoxide emissions) on the basis of at least one parameter indicative of the pressure Pₚₗ of the air measured in the plenum 3.

The CO unit 21 is configured to calculate the current CO emissions on the basis of the pressure Pₚₗ of the air measured in the plenum 3 and preferably on the basis of at least of one of the following parameters:
- the pressure Pₑₓ of the hot gases at the exhaust 26 of the gas turbine 5;
- the number n_{ON} of burners 18 switched-on in the second-stage combustor 15;
- the temperature T_{HG} at the inlet of the gas turbine 5;
- the temperature Tₖ₁ at the inlet 9 of the compressor 2;

Preferably, the temperature T_{HG} at the inlet 25 of the turbine 5 is calculated at least on the basis of the pressure Pₚₗ of the air measured in the plenum 3.

More preferably, the temperature T_{HG} at the inlet 25 of the turbine 5 is calculated on the basis of the pressure Pₚₗ of the air measured in the plenum 3 and on the basis of at least of one of the following parameters:
- the amount of air mₐᵢᵣ entering in the compressor 2;
- the amount of fuel m_{fluel} supplied to the second-stage combustor 15;
- the pressure Pₑₓ of the hot gases at the exhaust 26 of the gas turbine 5.

The BSP unit 22 is configured to calculate the switching off parameter BSP on the basis of at least the pressure Pₚₗ of the air measured in the plenum 3.

Preferably, the BSP parameter is calculated on the basis of the pressure Pₚₗ of the air measured in the plenum 3 and on the basis of at least of one of the following parameters:
- the average temperature TAT_{avg} at the exhaust 26 of the turbine 5;
- the pressure Pₑₓ of the hot gases at the exhaust 26 of the gas turbine 5;
- the temperature Tₖ₁ at the inlet 9 of the compressor 2;
- the gas composition C₂₊ of the fuel;
- the temperature T_{fuel} of the fuel measured upstream of the combustor assembly 4.

The supply control unit 24 is configured to regulate the switching off of the plurality of burners 18 and the fuel supply to the combustor assembly 4 on the basis of the switching-off parameter BSP calculated by the BSP unit 22 and/or on the basis of the current CO emissions calculated by the CO unit 21.

The supply control unit 24 is configured to regulate the switching-off of the plurality of burners 18 and the fuel supply to the combustor assembly 4 in such a way that the switching off parameter BSP is above a certain BSP limit and/or in such a way that the current CO emissions do not exceed a CO limit value.

In other words, the supply control unit 24 is configured to determine the number n_{ON} of the burners 18 switched-on and the amount of fuel m_{fuel} to be supplied to the combustor assembly 4.

In use, the gas turbine assembly 1 operates at different loads depending on the request of the network.

At any load, the control device 8 regulates the combustor assembly 4 in such a way to keep pollutant emissions under the limits by regulating the number n_{ON} of the burners 18 switched-on in the second-stage combustor 15 and/or the amount of fuel m_{fuel} to be supplied to the combustor assembly 4.

Using a parameter indicative of the pressure in the plenum for controlling the combustor assembly 4 has great advantages in terms of reliability and stability during the operation of the gas turbine assembly 1.

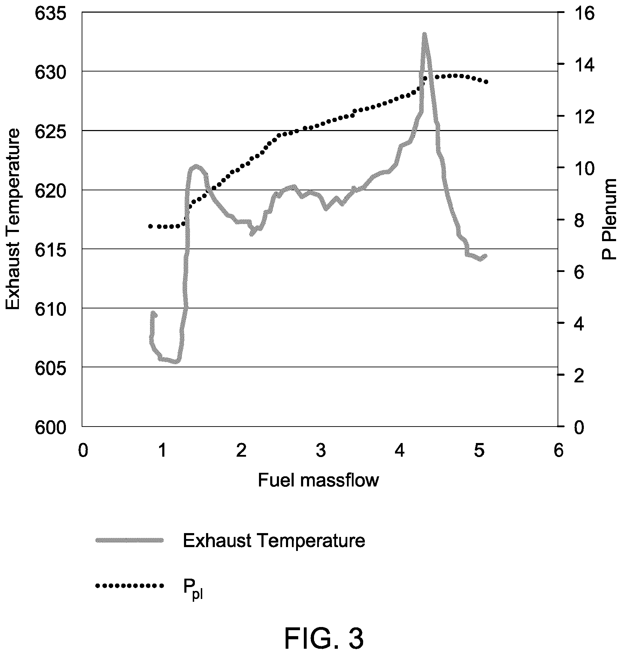

Looking at the diagram in figure 3, pressure Pₚₗ in the plenum 3 (dotted line) correlates better to fuel mass flow than turbine exhaust temperature (full stretch line) at transient loads.

Therefore, using the pressure Pₚₗ in the plenum 3 in the control of the combustor assembly 4 would lead to a more reliable operation of the gas turbine assembly 1.

Finally, it is clear that modifications and variants can be made to the method and to the assembly described herein without departing from the scope of the present invention, as defined in the appended claims.

## Claims

1. Method for operating a gas turbine assembly (1) extending along a longitudinal axis (A) and comprising a compressor (2), a combustor assembly (4) and at least one gas turbine (5); the compressor (2) comprises an inlet (9) supplied with air and an outlet (10) through which the air compressed by the compressor (2) flows; the outlet (10) of the compressor (2) comes out into a plenum (3), which is in fluidic communication with the combustor assembly (4); the combustor assembly (4) comprising at least one combustor (15) coupled to the gas turbine (5) and provided with a plurality of burners (18);
the method comprising controlling the combustor assembly (4) on the basis of at least one parameter (Pₚₗ) indicative of the pressure of the air measured in the plenum (3); the step of controlling the combustor assembly (4) comprises regulating the supply of fuel to the at least one combustor (15) on the basis of at least the parameter (Pₚₗ) indicative of the pressure of the air measured in the plenum (3);
the method being **characterized in that** regulating the supply of fuel to the at least one combustor (15) comprises:
• calculating the current emissions of monoxide carbon (CO) on the basis of at least the parameter (Pₚₗ) indicative of the pressure of the air measured in the plenum (3);
• regulate the fuel supply so as to keep the CO emissions under a CO limit.

2. Method according to claim 1, wherein regulating the supply of fuel to the at least one combustor (15) comprises regulating the amount of fuel supplied to the at least one combustor (15) and/or regulating the switching-off of at least one of the plurality of burners (18) of the combustor (15).

3. Method according to claim 1 or 2, wherein calculating the current emissions of monoxide carbon (CO) is based on the pressure (Pₚₗ) of the air measured in the plenum (3) and on at least one of the following parameters:
- the pressure (Pₑₓ) of the hot gases at the exhaust (26) of the gas turbine (5);
- the temperature (Tₖ₁) at the inlet (9) of the compressor (2);
- the number (n_{ON}) of burners (18) switched-on in combustor (15);
- the temperature (T_{HG}) at the inlet (25) of the gas turbine (5).

4. Method according to claim 3, wherein the temperature (T_{HG}) at the inlet (25) of the gas turbine (5) is calculated at least on the basis of one parameter (Pₚₗ) indicative of the pressure of the air measured in the plenum (3).

5. Method according to claim 4, wherein the temperature (T_{HG}) at the inlet (25) of the gas turbine (5) is calculated on the basis of the pressure (Pₚₗ) of the air measured in the plenum (3) and on the basis of at least one of the following parameters:
- the amount of air (mₐᵢᵣ) entering in the compressor (2);
- the amount of fuel (m_{fuel}) supplied to the combustor (15) ;
- the pressure (Pₑₓ) of the hot gases at the exhaust (26) of the gas turbine (5).

6. Method according to anyone of the foregoing claims, wherein regulating the supply of fuel to the at least one combustor (15) comprises:
calculating a switching off parameter (BSP) on the basis of at least the parameter (Pₚₗ) indicative of the pressure of the air measured in the plenum (3);
regulate the fuel supply so as to keep the switching off parameter (BSP) emissions above a defined limit.

7. Method according to claim 6, wherein the switching off parameter (BSP) parameter is calculated on the basis of at least the parameter (Pₚₗ) indicative of the pressure of the air measured in the plenum (3) and on the basis of at least one of the following parameters:
- the average temperature (TAT_{avg}) at the exhaust (26) of the turbine (5);
- the pressure (Pₑₓ) of the hot gases at the exhaust (26) of the gas turbine (5);
- the temperature (Tₖ₁) at the inlet (9) of the compressor (2);
- the gas composition (C₂₊) of the fuel;
- the temperature (T_{fuel}) of the fuel measured upstream of the combustor assembly (4);

8. Gas turbine assembly (1) extending along a longitudinal axis (A) and comprising a compressor (2), a combustor assembly (4) and at least one gas turbine (5); the compressor (2) comprising an inlet (9) supplied with air and an outlet (10) through which the air compressed by the compressor (2) flows; the outlet (10) of the compressor (2) coming out into a plenum (3), which is in fluidic communication with the combustor assembly (4);
the combustor assembly (4) comprising at least one combustor (15) coupled to the gas turbine (5) and provided with a plurality of burners (18);
the gas turbine assembly (1) comprising a control device (8) configured to control the combustor assembly (4) on the basis of at least one parameter (Pₚₗ) indicative of the pressure of the air measured in the plenum (3); wherein the control device (8) comprises a supply control unit (24) configured to regulate the supply of fuel to the at least one combustor (15) on the basis of at least the parameter (Pₚₗ) indicative of the pressure of the air measured in the plenum (3);
the gas turbine being **characterized in that** the control device (8) comprises a CO unit (21) configured to calculate the current emissions of monoxide carbon (CO) on the basis of at least the parameter (Pₚₗ) indicative of the pressure of the air measured in the plenum (3); the supply control unit (24) being configured to regulate the fuel supply so as to keep the CO emissions under a CO limit.

9. Gas turbine assembly according to claim 8, wherein the supply control unit (24) is configured to regulate the amount of fuel supplied to the at least one combustor (15) and/or to regulate the switching-off of at least one of the plurality of burners (18) of the combustor (15).

10. Gas turbine assembly according to anyone of claim 8 or 9, wherein the control device (8) comprises a BSP unit (22) configured to calculate a switching off parameter (BSP) on the basis of at least the parameter (Pₚₗ) indicative of the pressure of the air measured in the plenum (3); the supply control unit (24) being configured to regulate the fuel supply so as to keep the switching off parameter (BSP) emissions above a defined limit.

## Patentansprüche

1. Verfahren zum Betreiben einer Gasturbinenanordnung (1), die sich entlang einer Längsachse (A) erstreckt und einen Verdichter (2), eine Brennkammeranordnung (4) und wenigstens eine Gasturbine (5) umfasst; wobei der Verdichter (2) einen Einlass (9), dem Luft zugeführt wird, und einen Auslass (10) umfasst, durch den die vom Verdichter (2) verdichtete Luft strömt; wobei der Auslass (10) des Verdichters (2) in eine Sammelkammer (3) mündet, die in fluidischer Verbindung mit der Brennkammeranordnung (4) steht; wobei die Brennkammeranordnung (4) wenigstens eine Brennkammer (15) umfasst, die mit der Gasturbine (5) gekoppelt und mit mehreren Brennern (18) versehen ist;
wobei das Verfahren ein Steuern der Brennkammeranordnung (4) auf der Grundlage von wenigstens einem Parameter (Pₚₗ) umfasst, der den in der Sammelkammer (3) gemessenen Luftdruck angibt;
wobei der Schritt des Steuerns der Brennkammeranordnung (4) ein Regeln der Zufuhr von Brennstoff zu der wenigstens einen Brennkammer (15) auf der Grundlage wenigstens des Parameters (Pₚₗ) umfasst, der den in der Sammelkammer (3) gemessenen Luftdruck angibt;
wobei das Verfahren **dadurch gekennzeichnet ist, dass** das Regeln der Zufuhr von Brennstoff zu der wenigstens einen Brennkammer (15) umfasst:
• Berechnen der aktuellen Emissionen von Kohlenmonoxid (CO) auf der Grundlage wenigstens des Parameters (Pₚₗ), der den in der Sammelkammer (3) gemessenen Luftdruck angibt;
• Regeln der Brennstoffzufuhr so, dass die CO-Emissionen unter einem CO-Grenzwert bleiben.

2. Verfahren nach Anspruch 1, wobei das Regeln der Brennstoffzufuhr zu der wenigstens einen Brennkammer (15) ein Regeln der der wenigstens einen Brennkammer (15) zugeführten Brennstoffmenge und/oder ein Regeln der Abschaltung von wenigstens einem der mehreren Brenner (18) der Brennkammer (15) umfasst.

3. Verfahren nach Anspruch 1 oder 2, wobei das Berechnen der aktuellen Emissionen von Kohlenmonoxid (CO) auf dem in der Sammelkammer (3) gemessenen Luftdruck (Pₚₗ) und auf wenigstens einem der folgenden Parameter basiert:
- dem Druck (Pₑₓ) der heißen Gase am Auslass (26) der Gasturbine (5);
- der Temperatur (Tₖ₁) am Einlass (9) des Verdichters (2) ;
- der Anzahl (n_{ON}) der eingeschalteten Brenner (18) in der Brennkammer (15);
- der Temperatur (T_{HG}) am Einlass (25) der Gasturbine (5) .

4. Verfahren nach Anspruch 3, wobei die Temperatur (T_{HG}) am Einlass (25) der Gasturbine (5) wenigstens auf der Grundlage eines Parameters (Pₚₗ) berechnet wird, der den in der Sammelkammer (3) gemessenen Luftdruck angibt.

5. Verfahren nach Anspruch 4, wobei die Temperatur (T_{HG}) am Einlass (25) der Gasturbine (5) auf der Grundlage des in der Sammelkammer (3) gemessenen Luftdrucks (Pₚₗ) und auf der Grundlage von wenigstens einem der folgenden Parameter berechnet wird:
- der in den Verdichter (2) eintretenden Luftmenge (mₐᵢᵣ) ;
- der der Brennkammer (15) zugeführten Brennstoffmenge (m_{fuel}) ;
- dem Druck (Pₑₓ) der heißen Gase am Auslass (26) der Gasturbine (5).

6. Verfahren nach einem der vorangehenden Ansprüche, wobei das Regeln der Zufuhr von Brennstoff zu der wenigstens einen Brennkammer (15) umfasst:
Berechnen eines Abschaltparameters (BSP) auf der Grundlage wenigstens des Parameters (Pₚₗ), der den in der Sammelkammer (3) gemessenen Luftdruck angibt;
Regeln der Brennstoffzufuhr so, dass die Emissionen in Bezug auf den Abschaltparameter (BSP) über einem definierten Grenzwert gehalten werden.

7. Verfahren nach Anspruch 6, wobei der Abschaltparameter (BSP) auf der Grundlage wenigstens des Parameters (Pₚₗ), der den in der Sammelkammer (3) gemessenen Luftdruck angibt, und auf der Grundlage wenigstens eines der folgenden Parameter berechnet wird:
- der durchschnittlichen Temperatur (TAT_{avg}) am Auslass (26) der Turbine (5);
- dem Druck (Pₑₓ) der heißen Gase am Auslass (26) der Gasturbine (5);
- der Temperatur (Tₖ₁) am Einlass (9) des Verdichters (2) ;
- die Gaszusammensetzung (C₂₊) des Brennstoffs;
- die Temperatur (T_{fuel}) des Brennstoffs, die stromaufwärts der Brennkammeranordnung (4) gemessen wird.

8. Gasturbinenanordnung (1), die sich entlang einer Längsachse (A) erstreckt und einen Verdichter (2), eine Brennkammeranordnung (4) und wenigstens eine Gasturbine (5) umfasst; wobei der Verdichter (2) einen Einlass (9), dem Luft zugeführt wird, und einen Auslass (10) umfasst, durch den die vom Verdichter (2) verdichtete Luft strömt; wobei der Auslass (10) des Verdichters (2) in eine Sammelkammer (3) mündet, die in fluidischer Verbindung mit der Brennkammeranordnung (4) steht; wobei die Brennkammeranordnung (4) wenigstens eine mit der Gasturbine (5) gekoppelte Brennkammer (15) umfasst, die mit mehreren Brennern (18) versehen ist;
wobei die Gasturbinenanordnung (1) eine Steuervorrichtung (8) umfasst, die dazu konfiguriert ist, die Brennkammeranordnung (4) auf der Grundlage von wenigstens einem Parameter (Pₚₗ) zu steuern, der den in der Sammelkammer (3) gemessenen Luftdruck angibt; wobei die Steuervorrichtung (8) eine Zufuhr-Steuereinheit (24) umfasst, die dazu konfiguriert ist, die Zufuhr von Brennstoff zu der wenigstens einen Brennkammer (15) auf der Grundlage von wenigstens dem Parameter (Pₚₗ) zu regeln, der den in der Sammelkammer (3) gemessenen Luftdruck angibt;
wobei die Gasturbine **dadurch gekennzeichnet ist, dass** die Steuereinrichtung (8) eine CO-Einheit (21) umfasst, die dazu konfiguriert ist, die aktuellen Emissionen von Kohlenmonoxid (CO) auf der Grundlage wenigstens des Parameters (Pₚₗ) zu berechnen, der den in der Sammelkammer (3) gemessenen Luftdruck angibt;
wobei die Zufuhr-Steuereinheit (24) dazu konfiguriert ist, die Brennstoffzufuhr so zu regeln, dass die CO-Emissionen unter einem CO-Grenzwert gehalten werden.

9. Gasturbinenanordnung nach Anspruch 8, wobei die Zufuhr-Steuereinheit (24) dazu konfiguriert ist, die der wenigstens einen Brennkammeranordnung (15) zugeführte Brennstoffmenge zu regeln und/oder die Abschaltung von wenigstens einem der mehreren Brenner (18) der Brennkammeranordnung (15) zu regeln.

10. Gasturbinenanordnung nach einem der Ansprüche 8 oder 9, wobei die Steuervorrichtung (8) eine BSP-Einheit (22) umfasst, die dazu konfiguriert ist, einen Abschaltparameter (BSP) auf der Grundlage wenigstens des Parameters (Pₚₗ) zu berechnen, der den in der Sammelkammer (3) gemessenen Luftdruck angibt; wobei die Zufuhr-Steuereinheit (24) dazu konfiguriert ist, die Brennstoffzufuhr so zu regeln, dass die Emissionen in Bezug auf den Abschaltparameter (BSP) über einem definierten Grenzwert gehalten werden.

## Revendications

1. Procédé de fonctionnement d'un ensemble de turbine à gaz (1) s'étendant le long d'un axe longitudinal (A) et comprenant un compresseur (2), un ensemble de combustion (4) et au moins une turbine à gaz (5) ; le compresseur (2) comprend une entrée (9) alimentée en air et une sortie (10) à travers laquelle l'air comprimé par le compresseur (2) s'écoule ; la sortie (10) du compresseur (2) débouche dans un plénum (3), qui est en communication fluidique avec l'ensemble de combustion (4) ; l'ensemble de combustion (4) comprenant au moins une chambre de combustion (15) couplée à la turbine à gaz (5) et dotée d'une pluralité de brûleurs (18) ;
le procédé comprenant la commande de l'ensemble de combustion (4) sur la base d'au moins un paramètre (Pₚₗ) indiquant la pression de l'air mesurée dans le plénum (3) ; l'étape de commande de l'ensemble de combustion (4) comprend la régulation de l'amenée de combustible à la au moins une chambre de combustion (15) sur la base d'au moins le paramètre (Pₚₗ) indiquant la pression de l'air mesurée dans le plénum (3) ;
le procédé étant **caractérisé par le fait que** la régulation de l'amenée de combustible à l'au moins une chambre de combustion (15) comprend :
- le calcul des émissions actuelles de monoxyde de carbone (CO) sur la base d'au moins le paramètre (Pₚₗ) indiquant la pression de l'air mesurée dans le plénum (3) ;
- la régulation de l'amenée de combustible de manière à maintenir les émissions de CO en deçà d'une limite de CO.

2. Procédé selon la revendication 1, dans lequel la régulation de l'amenée de combustible à la au moins une chambre de combustion (15) comprend la régulation de la quantité de combustible amenée à la chambre de combustion (15) et/ou la régulation de l'arrêt d'au moins un de la pluralité de brûleurs (18) de la chambre de combustion (15).

3. Procédé selon la revendication 1 ou 2, dans lequel le calcul des émissions actuelles de monoxyde de carbone (CO) est basé sur la pression (Pₚₗ) de l'air mesurée dans le plénum (3) et sur au moins l'un des paramètres suivants :
- la pression (Pₑₓ) des gaz chauds à l'échappement (26) de la turbine à gaz (5) ;
- la température (Tₖ₁) à l'entrée (9) du compresseur (2) ;
- le nombre (n_{ON}) de brûleurs (18) allumés dans la chambre de combustion (15) ;
- la température (T_{HG}) à l'entrée (25) de la turbine à gaz (5).

4. Procédé selon la revendication 3, dans lequel la température (T_{HG}) à l'entrée (25) de la turbine à gaz (5) est calculée au moins sur la base d'un paramètre (Pₚₗ) indiquant la pression de l'air mesurée dans le plénum (3).

5. Procédé selon la revendication 4, dans lequel la température (T_{HG}) à l'entrée (25) de la turbine à gaz (5) est calculée sur la base de la pression (Pₚₗ) de l'air mesurée dans le plénum (3) et sur la base d'au moins un des paramètres suivants :
- la quantité d'air (mₐᵢᵣ) entrant dans le compresseur (2) ;
- la quantité de carburant (m_{fuel}) amenée à la chambre de combustion (15) ;
- la pression (Pₑₓ) des gaz chauds à l'échappement (26) de la turbine à gaz (5).

6. Procédé selon l'une quelconque des revendications précédentes, dans lequel la régulation de l'amenée de combustible à la au moins une chambre de combustion (15) comprend :
le calcul d'un paramètre d'arrêt (BSP) sur la base d'au moins le paramètre (Pₚₗ) indiquant la pression de l'air mesurée dans le plénum (3) ;
la régulation de l'amenée de combustible de manière à maintenir les émissions du paramètre d'arrêt (BSP) au-dessus d'une limite définie.

7. Procédé selon la revendication 6, dans lequel le paramètre d'arrêt (BSP) est calculé sur la base d'au moins le paramètre (Pₚₗ) indiquant la pression de l'air mesurée dans le plénum (3) et sur la base d'au moins l'un des paramètres suivants :
- la température moyenne (TAT_{avg}) à l'échappement (26) de la turbine (5) ;
- la pression (Pₑₓ) des gaz chauds à l'échappement (26) de la turbine à gaz (5) ;
- la température (Tₖ₁) à l'entrée (9) du compresseur (2) ;
- la composition en gaz (C₂₊) du combustible ;
- la température (T_{fuel}) du combustible mesurée en amont de la chambre de combustion (4) ;

8. Ensemble de turbine à gaz (1) s'étendant le long d'un axe longitudinal (A) et comprenant un compresseur (2), un ensemble de combustion (4) et au moins une turbine à gaz (5) ; le compresseur (2) comprenant une entrée (9) alimentée en air et une sortie (10) à travers laquelle l'air comprimé par le compresseur (2) s'écoule ; la sortie (10) du compresseur (2) débouche dans un plénum (3), qui est en communication fluidique avec l'ensemble de combustion (4) ; l'ensemble de combustion (4) comprenant au moins une chambre de combustion (15) couplée à la turbine à gaz (5) et pourvue d'une pluralité de brûleurs (18) ;
l'ensemble de turbine à gaz (1) comprenant un dispositif de commande (8) configuré pour commander l'ensemble de chambre de combustion (4) sur la base d'au moins un paramètre (Pₚₗ) indiquant la pression de l'air mesurée dans le plénum (3) ; dans lequel le dispositif de commande (8) comprend une unité de commande d'amenée (24) configurée pour réguler l'amenée de carburant de la au moins une chambre de combustion (15) sur la base d'au moins le paramètre (Pₚₗ) indiquant la pression de l'air mesurée dans le plénum (3) ;
la turbine à gaz étant **caractérisée en ce que** le dispositif de commande (8) comprend une unité CO (21) configurée pour calculer les émissions actuelles de monoxyde de carbone (CO) sur la base d'au moins le paramètre (Pₚₗ) indiquant la pression de l'air mesurée dans le plénum (3) ; l'unité de commande d'amenée (24) étant configurée pour réguler l'amenée de combustible de manière à maintenir les émissions de CO en deçà d'une limite de CO.

9. Ensemble de turbine à gaz selon la revendication 8, dans lequel l'unité de commande d'amenée (24) est configurée pour réguler la quantité de combustible amenée à la au moins une chambre de combustion (15) et/ou pour réguler l'arrêt d'au moins un de la pluralité de brûleurs (18) de la chambre de combustion (15).

10. Ensemble de turbine à gaz selon l'une quelconque de la revendication 8 ou 9, dans lequel le dispositif de commande (8) comprend une unité BSP (22) configurée pour calculer un paramètre d'arrêt (BSP) sur la base d'au moins le paramètre (Pₚₗ) indiquant la pression de l'air mesurée dans le plénum (3) ; l'unité de commande de l'amenée (24) étant configurée pour réguler l'amenée de combustible de manière à maintenir les émissions du paramètre d'arrêt (BSP) au-dessus d'une limite définie.
